# EUROPEAN PATENT APPLICATION

(11) **EP 4 811 297 A1**
(43) Date of publication of application: **23.09.2026**
(21) Application number: 26153639.5
(22) Date of filing: 22.01.2026
(51) Int. Cl.: G06V 10/46

(54) **STRIP SHAPE DETERMINING DEVICE AND STRIP SHAPE DETERMINING METHOD**

(30) Priority: 17.03.2025 JP 2025042003
(71) Applicant: Primetals Technologies Japan, Ltd., Hiroshima-shi, Hiroshima 733-8553 (JP)
(72) Inventor: MOCHIZUKI, Chitoshi, Hiroshima-shi, Hiroshima 733-8553 (JP); KANEMORI, Shinya, Tokyo 100-8332 (JP); MORINO, Tomoya, Tokyo 100-8332 (JP)
(74) Representative: Strehl & Partner mbB

(57) **Abstract**

To provide a strip shape determining device and a strip shape determining method capable of enhancing the determination accuracy of the strip shape of a metal strip as compared with before. Provided are loopers 71, 72, 73, and 74 that are installed with rotating shafts thereof extending in the width direction of a metal strip 1 and lift the metal strip 1 upward, cameras 61, 62, 63, and 64 that photograph images including a lifted area of the metal strip 1 lifted toward the upper side by the loopers 71, 72, 73, and 74, a luminance data acquisition unit 81 that acquires a luminance value of B (blue) from luminance data of R (red), G (green), and B (blue) of pixels of the images photographed by the cameras 61, 62, 63, and 64, and an image processing unit 82 that obtains a reflecting light area in which the luminance value of B (blue) is equal to or larger than a certain value in the images by using only the luminance data of the luminance value of B (blue) acquired by the luminance data acquisition unit 81 and determines a defect of a strip shape on the basis of coordinates of the boundary position of the reflecting light area.

## Description

### BACKGROUND OF THE INVENTION

### 1. Field of the Invention

The present invention relates to a strip shape determining device and a strip shape determining method.

### 2. Description of the Related Art

As an example of a failure determining device and a failure determining method that can readily determine a failure in a strip surface shape of a metal strip without using a special light source such as a rod-shaped light source, Japanese Patent No. 6808888 describes including: a roll that is installed with a rotating shaft thereof extending in the width direction of a rolled steel strip, and lifts the rolled steel strip upward; a camera for photographing an image including a lifted area of the rolled steel strip lifted upward by the roll; and a control device that determines a failure in the strip surface shape of the rolled steel strip on the basis of the image photographed by the camera.

### SUMMARY OF THE INVENTION

In Patent Document 1 described above, a method of identifying a reflecting light area in which illumination light occurring on the surface of the metal strip appears to be reflected sets a luminance of the metal strip surface as a threshold value from an image of the rolled strip depicted by the camera, sets an area of the strip surface of the metal strip which area indicates luminances of values higher than the luminance of the set threshold value as the reflecting light area, acquires two-dimensional coordinate data of boundary lines on the upstream side and the downstream side of the reflecting light area from pixel coordinates of the image, and obtains an evaluation value (index) of the strip shape from the coordinate data.

Though there is no concrete description of a method of obtaining luminance in Patent Document 1, specifically, an RGB color image is converted into a monochrome image on a gray scale, the boundary lines on the upstream side and the downstream side of the reflecting light area are determined by using luminances in the monochrome image, and the evaluation of the strip shape is performed by performing predetermined mathematical processing using the two-dimensional coordinate data of the boundary lines. That is, the luminance of RGB is decomposed into three kinds, that is, the luminance of a luminance value of R (red), the luminance of a luminance value of G (green), and the luminance of a luminance value of B (blue), and an average value of the three kinds of luminance is used to perform the evaluation.

With the technology of Patent Document 1 described above, it is important to extract a change in the coordinates of the boundary lines of the reflecting light area with high accuracy in order to evaluate the strip shape of the metal strip being rolled with high accuracy. However, a result of repeated diligent investigation by the present inventor et al. has made it clear that there is room for improvement in accuracy of extracting the coordinates of the boundary lines of the reflecting light area with the technology described in Patent Document 1.

The present invention provides a strip shape determining device and a strip shape determining method capable of enhancing the determination accuracy of the strip shape of a metal strip more than conventional.

The present invention includes a plurality of means for solving the above-described problems. To cite an example of the means, there is provided a strip shape determining device for determining a defect of a strip shape of a metal strip rolled by a rolling mill, the strip shape determining device including: a roll that is installed with a rotating shaft thereof extending in a width direction of the metal strip and lifts the metal strip upward; a camera that photographs an image including a lifted area of the metal strip lifted toward the upper side by the roll; a luminance data acquisition unit that acquires a luminance value of B (blue) from luminance data of pixels of the image photographed by the camera; and an image processing unit that obtains a reflecting light area in which the luminance value of B (blue) is equal to or larger than a certain value in the image by using only the luminance data of the luminance value of B (blue) acquired by the luminance data acquisition unit, and determines the defect of the strip shape on the basis of coordinates of a boundary position of the reflecting light area.

According to the present invention, it is possible to enhance the determination accuracy of the strip shape of a metal strip more than conventional. Problems, configurations, and effects other than those described above will be made apparent by the following description of embodiments.

### BRIEF DESCRIPTION OF THE DRAWINGS

FIG. 1 is a schematic diagram illustrating a configuration of a rolling facility including a strip shape determining device according to an embodiment of the present invention;
FIG. 2 is a diagram illustrating an example of a state in which reflecting light of an illumination appears in a substantially rectangular band shape in a strip width direction on the surface of a metal strip in a looper portion between rolling mill stands at a time of operation in the rolling facility;
FIG. 3 is a diagram illustrating an example of a state in which the reflecting light of the illumination appears in an indefinite band shape in the strip width direction on the surface of the metal strip in the looper portion between the rolling mill stands at a time of operation in the rolling facility;
FIG. 4 is a diagram illustrating an example of chromaticities of a reflecting light area formed on the strip surface of a rolled metal strip;
FIG. 5 is a diagram illustrating an example of changes in a leveling value and changes in a coefficient C₁ of a first order component of x illustrated in Equation (1) calculated by four kinds of methods;
FIG. 6 is a diagram illustrating a definition of a leveling amount (Gd - Gw) when (Gd = Gw);
FIG. 7 is a diagram illustrating the definition of the leveling amount (Gd - Gw) when (Gd > Gw);
FIG. 8 is a diagram illustrating an example of average leveling values in a region A, a region B, and a region C in time periods in which leveling is stable;
FIG. 9 is a diagram illustrating an example of average values of C₁ in the region A, the region B, and the region C in the time periods in which leveling is stable;
FIG. 10 is a diagram illustrating an example of changes in the leveling value and changes in an amount of strip movement along a lateral direction;
FIG. 11 is a diagram illustrating an example of average amounts of strip movement along the lateral direction in the region A, the region B, and the region C in the time periods in which leveling is stable; and
FIG. 12 is a flowchart of strip shape detection in a strip shape determining device for a metal strip according to the embodiment.

### DESCRIPTION OF THE PREFERRED EMBODIMENTS

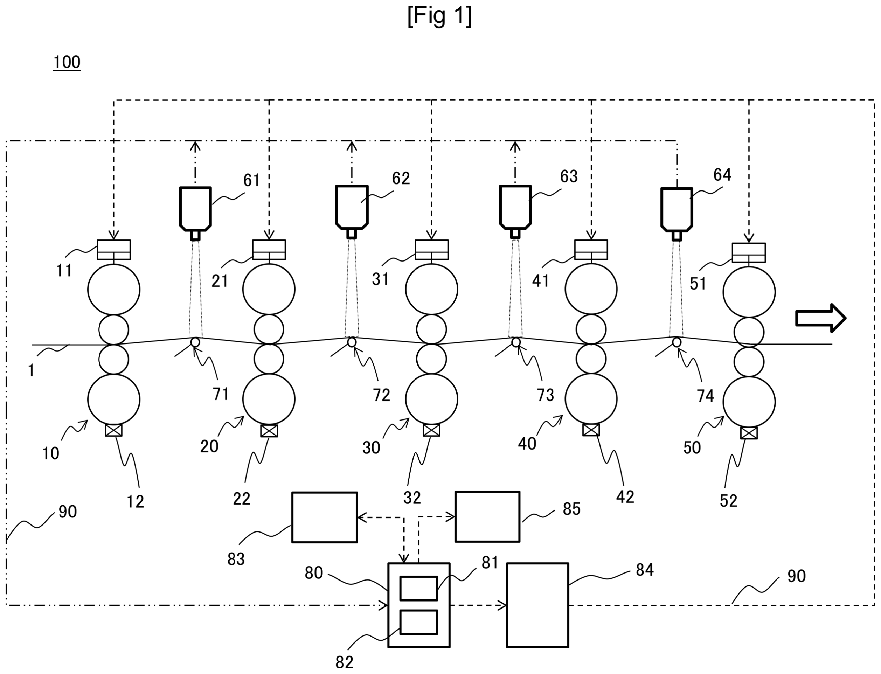

An embodiment of a strip shape determining device and a strip shape determining method according to the present invention will be described with reference to FIGS. 1 to 12. Incidentally, in the drawings used in the present specification, identical or corresponding constituent elements are given identical or similar reference numerals, and a repeated description of these constituent elements may be omitted.

Incidentally, a metal strip of a rolling target material in the present invention is generally a metal strip of a metallic material capable of being rolled. The kind of the metal strip is not particularly limited. A nonferrous material such as aluminum or copper can be used as the metal strip in addition to a steel strip.

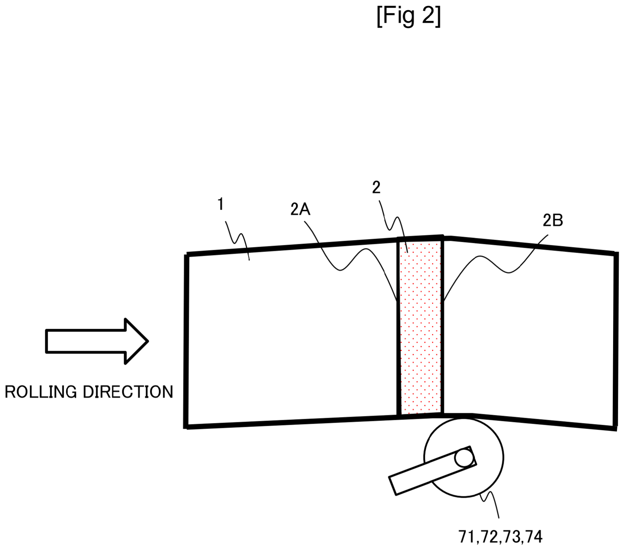

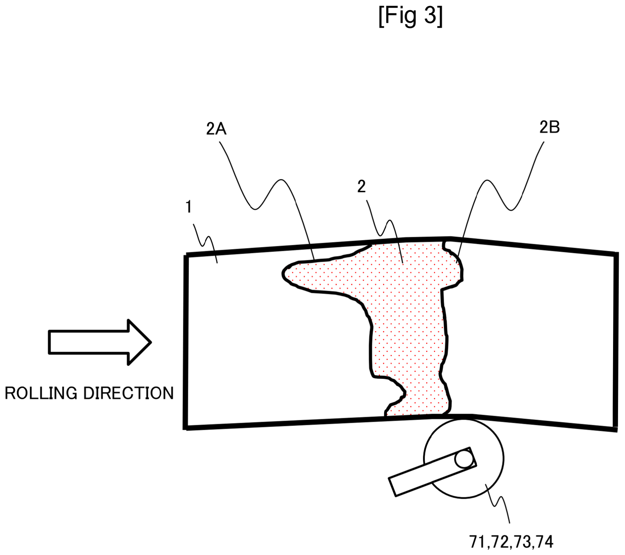

A general configuration of a rolling facility including a strip shape determining device for a metal strip will first be described with reference to FIGS. 1 to 3. FIG. 1 is a schematic diagram illustrating a configuration of the strip shape determining device for a metal strip according to the present embodiment and the rolling facility including the same. FIG. 2 and FIG. 3 are diagrams illustrating an example of a state in which reflecting light of an illumination appears in a band shape on the surface of the metal strip in a looper portion between rolling mill stands at a time of an operation in the rolling facility.

The rolling facility 100 for rolling the metal strip 1 illustrated in FIG. 1 includes an F1 rolling mill stand 10, an F2 rolling mill stand 20, an F3 rolling mill stand 30, an F4 rolling mill stand 40, an F5 rolling mill stand 50, cameras 61, 62, 63, and 64, loopers 71, 72, 73, and 74 for tension control, an image processing computer 80, a database 83, a control device 84, a monitor 85, and the like.

The F1 rolling mill stand 10, the F2 rolling mill stand 20, the F3 rolling mill stand 30, the F4 rolling mill stand 40, the F5 rolling mill stand 50, the cameras 61, 62, 63, and 64, the image processing computer 80, the database 83, the control device 84, and the monitor 85 are connected to one another by a communication line 90.

Of these, the cameras 61, 62, 63, and 64, the loopers 71, 72, 73, and 74, and the image processing computer 80 constitute the strip shape determining device that determines a defect of a strip shape of the metal strip 1 rolled by a rolling mill according to the present invention.

It is to be noted that the rolling facility 100 is not limited to the configuration in which five rolling mill stands are installed as illustrated in FIG. 1, but at least two rolling mill stands or more suffice for the rolling facility 100.

The F1 rolling mill stand 10, the F2 rolling mill stand 20, the F3 rolling mill stand 30, the F4 rolling mill stand 40, and the F5 rolling mill stand 50 respectively include top work rolls and bottom work rolls, top backup rolls and bottom backup rolls supporting the top work rolls and the bottom work rolls by being in contact with the top work rolls and the bottom work rolls, respectively, roll gap cylinders 11, 21, 31, 41, and 51 provided to upper portions of the top backup rolls, and load detectors 12, 22, 32, 42, and 52. Incidentally, a six-high configuration can be adopted in which intermediate rolls are further provided between the respective work rolls and the respective backup rolls.

The looper 71 is a roll for tension control installed between the F1 rolling mill stand 10 and the F2 rolling mill stand 20. The rotational axis of the looper 71 is disposed so as to extend in the width direction of the metal strip 1 such that the metal strip 1 in a moving state is mounted on the roll, and the looper 71 is installed so as to lift the metal strip 1 upward and hold the metal strip 1. Incidentally, the looper 71 may be, for example, one that biases the metal strip 1 upward by a spring or the like, one that lifts the metal strip 1 by, for example, driving a hydraulic cylinder or a motor, or the like.

Similarly, the looper 72 for tension control is installed between the F2 rolling mill stand 20 and the F3 rolling mill stand 30, the looper 73 for tension control is installed between the F3 rolling mill stand 30 and the F4 rolling mill stand 40, and the looper 74 for tension control is installed between the F4 rolling mill stand 40 and the F5 rolling mill stand 50.

The camera 61 is installed so as to photograph an image of the surface of the metal strip 1 including a range in which an area referred to as a reflecting light area 2 (see FIG. 2 and FIG. 3) in which band-shaped illumination light crossing in a strip width direction appears to be reflected can be observed on the surface of the metal strip 1 rolled and curved by being lifted by the looper 71. Preferably, the camera 61 can be installed on the outside in the strip width direction of the metal strip 1 when the metal strip 1 is viewed from above. The data of the image photographed by the camera 61 is transmitted to the image processing computer 80 via the communication line 90.

There is a case where a high speed camera is preferably used as this camera 61. An image acquisition speed can be set at 1000 to 2000000 frames/sec (FPS), for example. However, the concrete upper limit and lower limit are merely illustrative, and are not limited to the values. As with the camera 61, a high speed camera can be used as the cameras 62, 63, and 64 to be described later.

In addition, the camera 62 is installed at a position for photographing an image of the surface of the metal strip 1 including a range in which an area referred to as a reflecting light area 2 in which band-shaped illumination light crossing in the strip width direction appears to be reflected can be observed on the surface of the metal strip 1 rolled and lifted by the looper 72. The camera 63 is installed at a position for photographing an image of the surface of the metal strip 1 including a range in which an area referred to as a reflecting light area 2 in which band-shaped illumination light crossing in the strip width direction appears to be reflected can be observed on the surface of the metal strip 1 rolled and lifted by the looper 73. The camera 64 is installed at a position for photographing an image of the surface of the metal strip 1 including a range in which an area referred to as a reflecting light area 2 in which band-shaped illumination light crossing in the strip width direction appears to be reflected can be observed on the surface of the metal strip 1 rolled and lifted by the looper 74.

The data of the images photographed by the cameras 62, 63, and 64 is transmitted to the image processing computer 80 via the communication line 90.

As with the camera 61, preferably, the cameras 62, 63, and 64 are also installed on the outside in the strip width direction of the metal strip 1 when the metal strip 1 is viewed from above.

These cameras 61, 62, 63, and 64 perform a photographing step of photographing the images including the areas in which band-shaped reflecting light crossing in the strip width direction of the rolled metal strip 1 appears by using the cameras 61, 62, 63, and 64.

It is possible to further provide an illumination for illuminating the lifted photographed areas of the metal strip 1 lifted upward by the rolls, the photographed areas being mainly photographed by the cameras 61, 62, 63, and 64. This illumination may be an ordinary illumination disposed as appropriate on a ceiling of a rolling plant in which the rolling facility 100 is installed or the like. The present invention does not need a special new illumination facility. However, a dedicated illumination may be provided.

The image processing computer 80 is a device that performs various kinds of processing for detecting the strip shape of the metal strip 1 on the basis of the images photographed by the cameras 61, 62, 63, and 64. The image processing computer 80 includes a luminance data acquisition unit 81 and an image processing unit 82.

The luminance data acquisition unit 81 is a part that acquires a luminance value of B (blue) from luminance data of pixels of the images photographed by the cameras 61, 62, 63, and 64. Preferably, the luminance data acquisition unit 81 is an execution entity of a luminance data acquisition step of acquiring the luminance value of B (blue) from the luminance data of the pixels of the images photographed by the cameras 61, 62, 63, and 64.

The image processing unit 82 is a part that obtains a reflecting light area in which the luminance value of B (blue) is equal to or larger than a certain value in the images by using only the luminance data of the luminance value of B (blue) acquired by the luminance data acquisition unit 81 and determines a defect of the strip shape on the basis of coordinates of the boundary position of the reflecting light area. Preferably, the image processing unit 82 is an execution entity of an image processing step of obtaining the reflecting light area in which the luminance value of B (blue) is equal to or larger than the certain value in the images by using only the luminance data of the luminance value of B (blue) acquired by the luminance data acquisition unit 81 and determining a defect of the strip shape on the basis of the coordinates of the boundary position of the reflecting light area.

For example, the image processing of an image including a lifted region as a curved vicinity of the metal strip 1 rolled as illustrated in FIG. 2 or FIG. 3 and lifted by the loopers 71, 72, 73, and 74 identifies, as the reflecting light area 2, an area including boundaries on the upstream side and downstream side of a part in which the luminance of reflecting light on the surface of the metal strip 1 appearing in the image is higher than the value of a specific luminance.

At this time, as described in the description of Patent Document 1, in order to extract the coordinates of boundary lines on the upstream side and the downstream side of the reflecting light area 2, color images depicted by the cameras 61, 62, 63, and 64 are converted into monochrome images (gray scale), and an area indicating luminances of values higher than a specific threshold value is identified as the reflecting light area by using luminance values (0 to 255) on the gray scale.

Specifically, in the color images depicted by the cameras 61, 62, 63, and 64, the pixels constituting the images constitute the color images by synthesis of the respective luminance values of R (red), G (green), and B (blue). In converting the color images into the monochrome images (gray scale), average values of sums of the respective luminance values of R (red), G (green), and B (blue) become the luminance values converted into the gray scale.

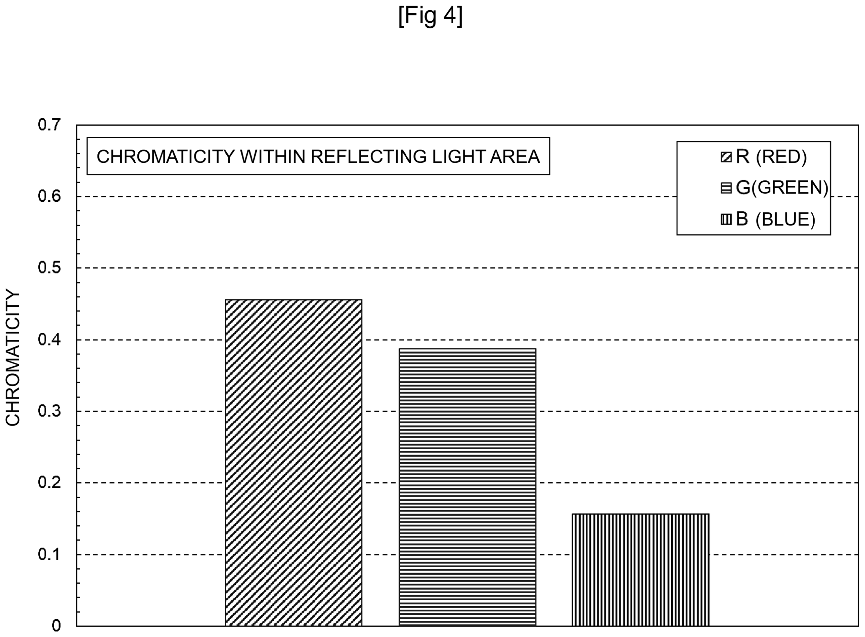

However, a result of actual measurement by the present inventor et al. of the luminance of the reflecting light area 2 formed on the strip surface of the metal strip 1 being rolled, by using a luminance meter, found that as illustrated in FIG. 4, chromaticities, that is, the relative ratios of R (red), G (green), and B (blue) are distributed differently. That is, it was observed that in the reflection of light on the surface of the metal strip 1 illuminated by the illumination, the intensity (luminance) of the reflecting light is different for each of R (red), G (green), and B (blue). It was found from the result of the chromaticities in FIG. 4 that the ratio of R (red) is approximately 45%, that the ratio of G (green) is approximately 39%, and that the ratio of B (blue) is approximately 16%.

Now, in determining the strip shape, changes in the reflecting light area 2 that appears to be bright with the illumination light reflected on the surface of the metal strip 1 are extracted by being converted into numerical values by image processing. The strip shape of the rolled strip is determined by mathematically processing the coordinates of the boundary lines on the upstream side and the downstream side of the extracted reflecting light area 2.

The strip shape is determined from a first order, a second order, and a fourth order component of x of the Chebyshev polynomial represented by the following Equation (1), and is specifically determined on the basis of coefficients (C₁, C₂, and C₄) of the respective order components. x denotes a strip width direction position of the metal strip being rolled. In Equation (1), x is standardized, and is defined in a range of (-1) to (+1). That is, a strip width edge portion position on a drive side (DS: drive side) is represented as (-1), and a strip width edge portion position on a work side (WS: work side) is represented as (+1).$E \left(x\right) = {C}_{0} + {C}_{1} \times x + {C}_{2} \times \left(2{x}^{2}-1\right) + {C}_{4} \times \left(8{x}^{4}-8{x}^{2}+1\right)$

The Chebyshev polynomial assumes that, for example, as an index of the strip buckle distribution in the strip width direction due to rolling, that is, as the rolling direction length of the reflecting light area 2 on the surface of the metal strip 1 at the loopers 71, 72, 73, and 74, E(x) indicates the rolling direction length of the reflecting light area 2 on the surface of the metal strip 1 at the loopers 71, 72, 73, and 74, and represents magnitude corresponding to a strip buckle due to rolling. Incidentally, C₀, C₁, C₂, and C₄ respectively denote the values of respective coefficients when the Chebyshev polynomial assumed to represent magnitude corresponding to the strip buckle distribution in the strip width direction is separated into respective components, that is, a zeroth order component, a first order component, a second order component, and a fourth order component of x. x denotes a standardized position in the strip width direction. For example, x = -1 indicates the strip width edge portion position on the drive side (DS), and x = 1 indicates the strip width edge portion position on the work side (WS). That is, in this case, when the coefficient (C₁) of the first order component of x in the Chebyshev polynomial is a positive value, the value indicates that a strip buckle on the work side (WS) is large. In addition, when the coefficient (C₂) of the second order component of x is a positive value, the value indicates that a buckle at a strip width edge portion is large as compared with a strip width central portion. In addition, when the coefficient (C₄) of the fourth order component of x is a negative value, the value indicates that a quarter buckle in the strip width direction is large.

The reflecting light area 2 is divided by a specific number in the strip width direction, the rolling direction length of the reflecting light area 2 as an index of the strip buckle distribution in the strip width direction in each divided zone is, for example, subjected to averaging processing within the divided zone, and a value resulting from the averaging processing is set again as the Chebyshev polynomial E(x), that is, an index assumed to represent magnitude corresponding to the strip buckle distribution in the strip width direction.

An important point in determining the strip shape of the metal strip 1 being rolled is whether or not the coordinates of the boundary lines on the upstream side and the downstream side of the reflecting light area 2 formed on the surface of the metal strip 1 depicted by the cameras 61, 62, 63, and 64 can be extracted with high accuracy. Thus, the present inventor et al. directed attention to the coefficient C₁, which is the coefficient of the first order component of x in Equation (1), and investigated, as methods for obtaining the coordinates of the boundary lines on the upstream side and the downstream side of the reflecting light area, respective methods of "[1] determining the boundary line coordinates of the reflecting light area 2 by using the composite luminance of RGB," "[2] determining the boundary line coordinates of the reflecting light area 2 by using only the luminance value of R (red)," "[3] determining the boundary line coordinates of the reflecting light area 2 by using only the luminance value of G (green)," and "[4] determining the boundary line coordinates of the reflecting light area 2 by using only the luminance value of B (blue)."

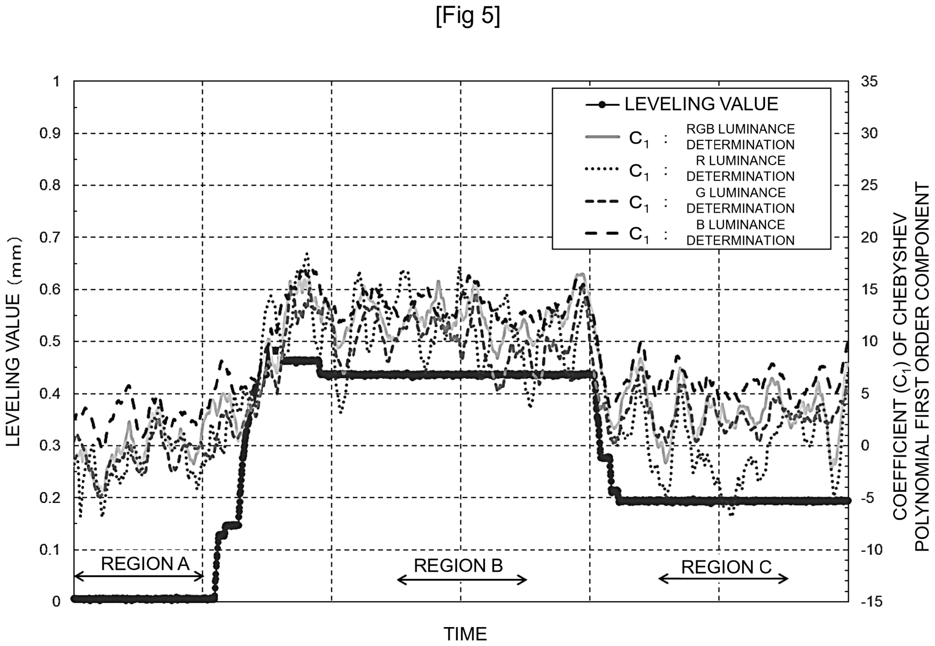

Changes in the coefficient C₁ in Equation (1) as an index of the first order component of the strip shape were investigated by intentionally changing the leveling of a rolling mill on the upstream side of an installed looper on a hot rolling line. The above-described methods of [1] to [4] were applied to the calculation of the coefficient C₁, and respective values of the coefficient C₁ were compared with each other. FIG. 5 illustrates both of changes in a leveling value and changes in the coefficient C₁.

In the following, a definition of a leveling amount will be illustrated.

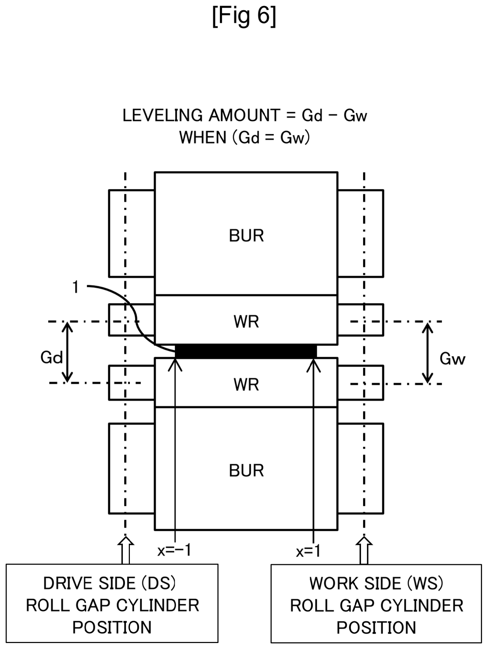

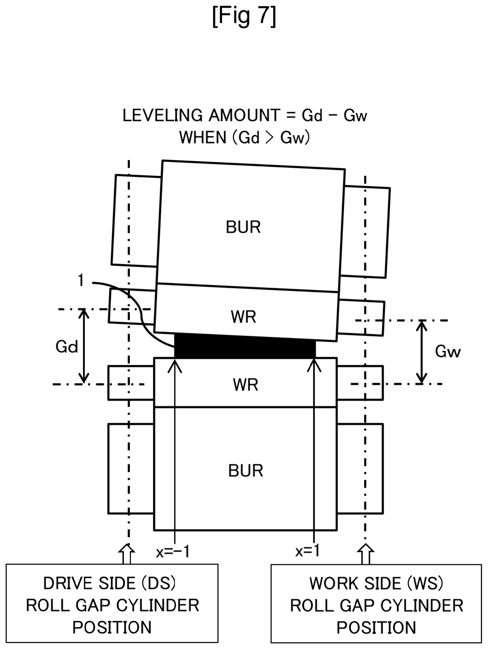

As illustrated in FIG. 6 and FIG. 7, the leveling amount is defined as a value (Gd - Gw) obtained by subtracting a distance Gw between the axes of top and bottom work rolls at the position of a roll gap cylinder on the work side (WS: Work Side) from a distance Gd between the axes of the top and bottom work rolls at the position of a roll gap cylinder on the drive side (DS: Drive Side).

Suppose that a strip thickness at a strip width center position does not change when the leveling amount is changed. Hence, as illustrated in FIG. 7, when the leveling amount is increased as compared with a state illustrated in FIG. 6, the strip thickness on the drive side (DS) is increased, the strip thickness on the work side (WS) is decreased, and a strip buckle on the work side (WS) is increased. When the value (C₁) of the first order component of the Chebyshev coefficient obtained by the present method is a positive value, the value indicates that a strip buckle on the work side (WS) is large. When the value (C₁) of the first order component is a negative value, the value indicates that a strip buckle on the drive side (DS) is large.

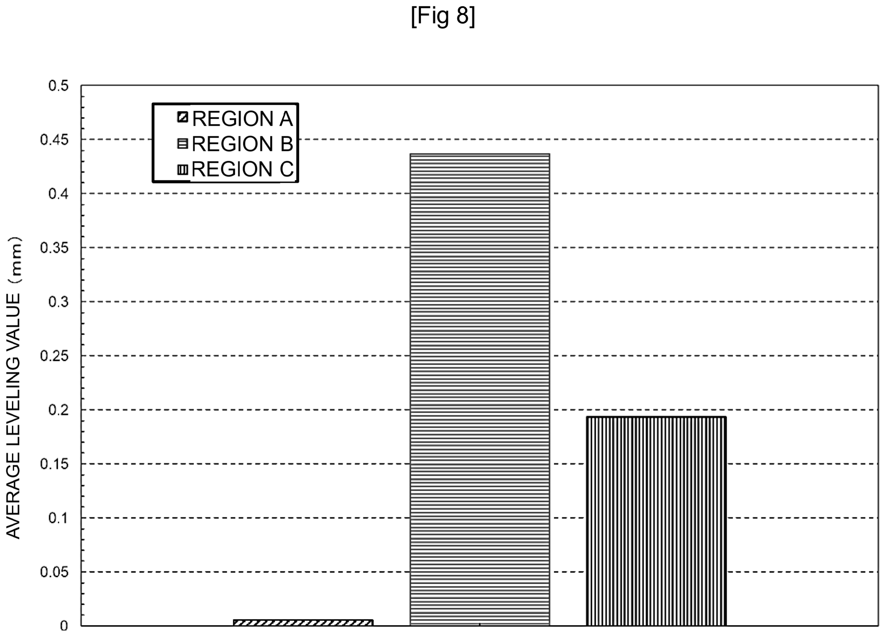

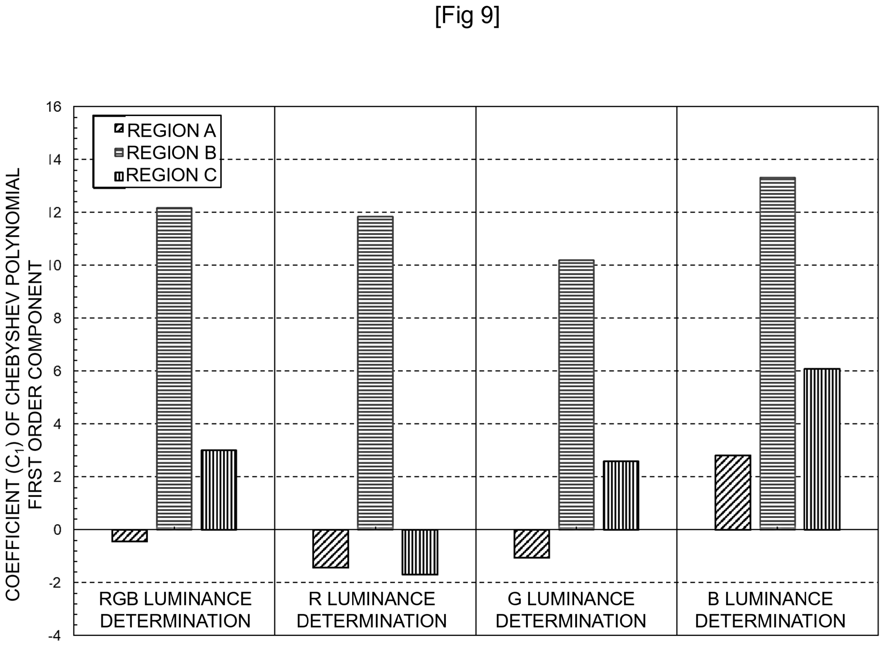

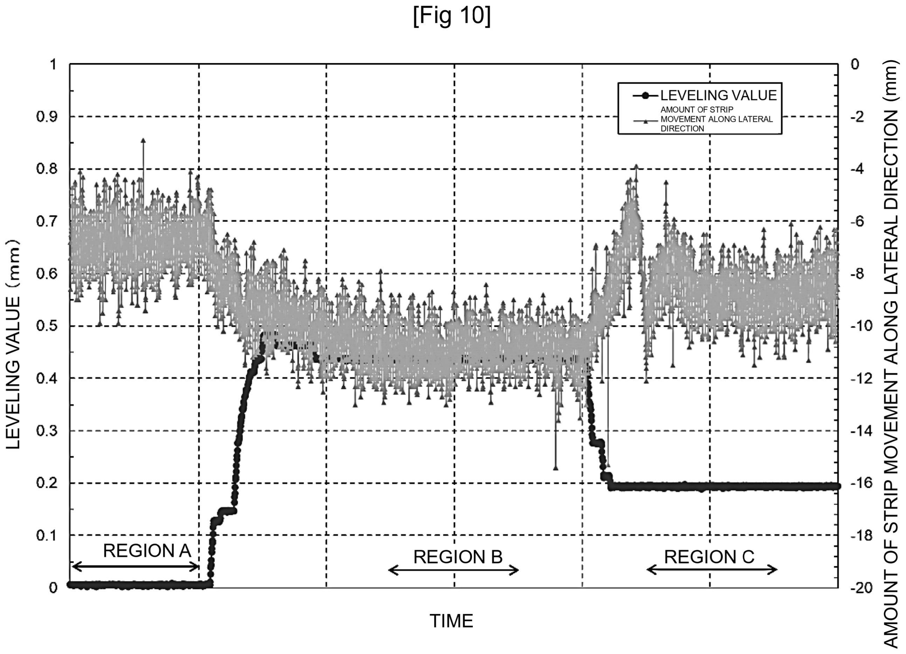

In FIG. 5, three parts of a region A, a region B, and a region C are selected as time periods in which the leveling value is stable. FIG. 8 illustrates averages of the leveling value in the time periods. FIG. 9 illustrates averages of the value of the coefficient C₁ obtained by the four kinds of methods in the time periods. FIG. 10 illustrates both of changes in the leveling value and changes in an amount of strip movement along a lateral direction at the times of the changes in the leveling value.

Here, the amount of strip movement along the lateral direction is defined as follows. An amount of displacement of the strip width center position of the metal strip 1 at a looper position located upstream of a rolling mill stand from a pass line strip width center position is measured, an amount of displacement of the strip width center position of the metal strip 1 at a looper position located downstream of the rolling mill stand from the pass line strip width center position is measured, and a value obtained by subtracting the amount of displacement of the strip width center position of the metal strip 1 at the looper position located downstream from the pass line strip width center position from the amount of displacement of the strip width center position of the metal strip 1 at the looper position located upstream from the pass line strip width center position is set as the amount of strip movement along the lateral direction.

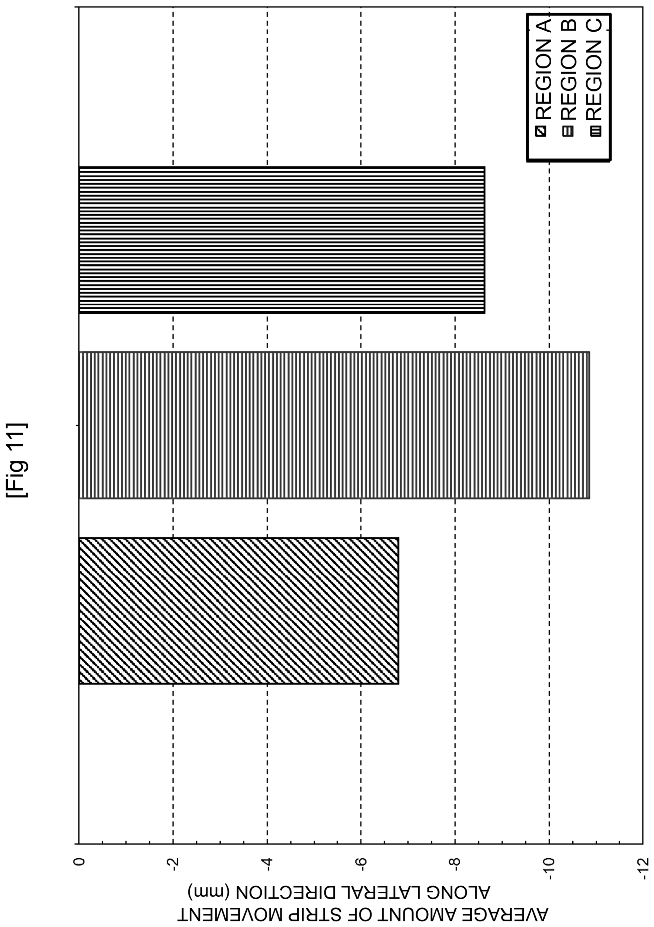

Further, FIG. 11 illustrates average amounts of strip movement along the lateral direction in the three positions of the region A, the region B, and the region C as time periods in which the leveling value is stable in FIG. 10.

As illustrated in FIG. 11, each of the average amounts of strip movement along the lateral direction in the region A, the region B, and the region C exhibits a negative (minus) value. The amount of strip movement along the lateral direction being a negative (minus) value means that the metal strip 1 is moving to DS (drive side) along the lateral direction. This means that the metal strip 1 is elongated more on WS (work side) than on DS (drive side). That is, it is important from a viewpoint of accuracy to obtain a positive (plus) value in each of the region A, the region B, and the region C as the coefficient C₁ of the first order component of x in the Chebyshev polynomial.

Because the value of the above-described coefficient C₁ needs to be a positive (plus) value in each of the region A, the region B, and the region C, it can be determined by looking at the values of the coefficient C₁ in FIG. 9 that the determination of the coefficient C₁ on the basis of the luminance value of B (blue) is appropriate. That is, in the determination using the luminance of the luminance value of R (red) or the luminance value of G (green), the coefficient C₁ of the first order component of x in the Chebyshev polynomial exhibits a negative (minus) value in the region A, which is estimated to cause an error in the evaluation of the coefficient C₁.

Hence, it is considered that there remains room for improvement in the evaluation of the coefficient C₁ in the luminance determination using the luminance value of RGB (blue) as a conventional method due to the inclusion of the components of the luminance value of R (red) and the luminance value of G (green). The same is considered to be true also for a method using the luminance value of R (red) and the luminance value of G (green), a method using the luminance value of R (red) and the luminance value of B (blue), and a method using the luminance value of G (green) and the luminance value of B (blue).

From these investigation results, a luminance determining method using only the luminance value of B (blue) is considered to be appropriate in extracting the boundary line coordinates of the reflecting light area for the calculation of the coefficient C₁.

Accordingly, the luminance data acquisition unit 81 acquires only the luminance value of B (blue) while excluding the luminance value of R (red) and the luminance value of G (green) from the luminance data of the pixels of the images photographed by the cameras 61, 62, 63, and 64. Then, the image processing unit 82 obtains the reflecting light area in which the luminance value of B (blue) is equal to or larger than a certain value in the images by using only the luminance value of B (blue) acquired by the luminance data acquisition unit 81, and determines a defect of the strip shape on the basis of the coordinates of the boundary position of the reflecting light area. The accuracy of calculation of the coefficient C₁ is thereby increased.

Further, in the reflecting light area 2 in which band-shaped reflecting light crossing in the strip width direction of the metal strip 1 appears, when a strip buckle distribution in a rolling direction (longitudinal direction of the metal strip) at each position in the strip width direction of the metal strip 1 is uniform, the surface of the metal strip 1 is flat, the strip shape is excellent, and a degree of steepness is similar and low in the strip width direction. Thus, as illustrated in FIG. 2, there is a small distribution difference in rolling direction length of the reflecting light area 2 at each position in the strip width direction. Therefore, an upstream side boundary line 2A and a downstream side boundary line 2B as boundary lines of the reflecting light area 2 obtained by the illumination are substantially parallel with each other with intervals between the upstream side boundary line 2A and the downstream side boundary line 2B substantially uniform in the strip width direction, and parameters such as an area value and an average length in the rolling direction of each zone in a case where the reflecting light area 2 is equally divided into a plurality of zones in the strip width direction are substantially uniform in all of the zones.

On the other hand, when there is a difference in buckling (for example, an edge buckle or a center buckle) in the rolling direction according to a position in the strip width direction, the metal strip is not flat, the strip shape is defective, and the degree of steepness is different in the strip width direction due to a strip wave or the like. Consequently, the length in the rolling direction of the area in which the reflecting light appears on the strip surface is different according to a position in the strip width direction, one or both of the upstream side boundary line 2A and the downstream side boundary line 2B as the boundary lines of the reflecting light area 2 obtained by the illumination undulate as illustrated in FIG. 3, and the intervals between the upstream side boundary line 2A and the downstream side boundary line 2B of the reflecting light area 2 are nonuniform in the strip width direction. Therefore, the parameters such as the area value and the average length in the rolling direction of each zone in the case where the reflecting light area 2 is equally divided into the plurality of zones in the strip width direction, for example, are nonuniform in each zone.

Further, at a time of determining the strip buckle distribution due to rolling in the strip width direction by applying, to the Chebyshev polynomial, the strip width direction distribution of a rolling direction maximum length of the reflecting light area 2 appearing on the surface of the metal strip 1 in the vicinity of a curved portion of the metal strip 1 lifted by the loopers 71, 72, 73, and 74 installed between the rolling mill stands on the rolling line, the image processing unit 82 preferably obtains the coordinates of a pixel point of the boundary position in a strip longitudinal direction of the reflecting light area, providing a value indicative of a position in the strip width direction is referred to as a variable (x), standardizes the position in the strip width direction within a strip width range in the reflecting light area in the images into a range of -1 ≤ x ≤ 1, calculates an index value related to a strip width direction buckle distribution of the metal strip 1 from a change in a strip longitudinal direction coordinate of the coordinates of the pixel point of the boundary position of the reflecting light area, obtains respective index values at a plurality of positions of (x) that are at least four points or more, applies the index values to the Chebyshev polynomial E(x) = C₀ + C₁ × x + C₂ × (2x² - 1) + C₄ × (8x⁴ - 8x² + 1) (where -1 ≤ x ≤ 1), performs curve fitting, obtains the coefficients (C₀, C₁, C₂, and C₄) of the Chebyshev polynomial, and determines a defect of the strip shape on the basis of the coefficient (C₁) of the term of the first order component of the Chebyshev polynomial.

In the following, a brief description will be made of a method of extracting the "index value related to the strip width direction buckle distribution of the metal strip 1."

The index value related to the strip width direction buckle distribution of the metal strip 1 can be specifically set as one of a "maximum value of an interval between the upstream side boundary line 2A and the downstream side boundary line 2B of the reflecting light area 2," an "average value of a maximum fluctuating amplitude of the upstream side boundary line 2A and a maximum fluctuating amplitude of the downstream side boundary line 2B of the reflecting light area 2," and an "average value of fluctuation frequencies of the upstream side boundary line 2A and the downstream side boundary line 2B of the reflecting light area 2."

The image processing unit 82 of the image processing computer 80 in the present embodiment preferably performs, for each of the obtained images, processing of calculating the index value related to the strip width direction buckle distribution of the metal strip 1 as one of the following three values by using the obtained images.

A method of obtaining the "maximum value of the interval between the upstream side boundary line 2A and the downstream side boundary line 2B of the reflecting light area 2" is as follows.

The image processing unit 82 assigns numbers 1, 2, 3, ..., k, ... to the obtained images in order, and determines a rolling direction position Pumin(k)i of a pixel located most upstream among the positions in the rolling direction of pixels constituting the upstream side boundary line 2A of the reflecting light area 2 within each of divided zones (i) (i = 1 to j) obtained by j-dividing the reflecting light area 2 in the strip width direction in an (k)th image. In addition, similarly, a rolling direction position Pdmax(k)i of a pixel located most downstream among the positions in the rolling direction of pixels constituting the downstream side boundary line 2B of the reflecting light area 2 is determined. This data is stored in the database 83.

In addition, the image processing unit 82 extracts first positional data of a most upstream position in the rolling direction within the divided zone (i) from among F pieces of data from Pumin(k - F + 1)i to Pumin(k)i for respective F images from an image number (k - F + 1) to an image number (k), the F images being stored in the database 83, and sets the first positional data as Pure_min(k)i as data of the (k)th image, and extracts second positional data of a most downstream position in the rolling direction within the divided zone (i) from among F pieces of data from Pdmax(k - F + 1)i to Pdmax(k)i and sets the second positional data as Pdre_max(k)i as data of the (k)th image. These pieces of data are stored in the database 83.

A difference [Pdre_max(k)i - Pure_min(k)i] between the pieces of positional data in the rolling direction is calculated for each divided zone (i), resulting j values of [Pdre_max(k)i - Pure_min(k)i] are represented as D(k)i as an index A (maximum length in the rolling direction of the reflecting light area 2) corresponding to a rolled metal strip buckle in the (k)th image, D(k)i is made to correspond to a center position in the strip width direction of each divided zone (i), and providing a value indicative of a position in the strip width direction is referred to as a variable (x), D(k)i in which a position in the strip width direction within a strip width range is made to correspond to a position x standardized into a range of -1 ≤ x ≤ 1 is set as E(xi) of the (k)th image. Incidentally, xi represents the center position in the strip width direction of the divided zone (i) by an (x) notation.

A method of obtaining the "average value of the maximum fluctuating amplitude of the upstream side boundary line 2A and the maximum fluctuating amplitude of the downstream side boundary line 2B of the reflecting light area 2" is as follows.

The image processing unit 82 assigns numbers 1, 2, 3, ..., k, ... to the obtained images in order, and determines a rolling direction position Pumin(k)i of a pixel located most upstream among the positions in the rolling direction of the pixels constituting the upstream side boundary line 2A of the reflecting light area 2, determines a rolling direction position Pumax(k)i of a pixel located most downstream among the positions in the rolling direction of the pixels constituting the upstream side boundary line 2A of the reflecting light area 2, determines a rolling direction position Pdmin(k)i of a pixel located most upstream among the positions in the rolling direction of the pixels constituting the downstream side boundary line 2B of the reflecting light area 2, and determines a rolling direction position Pdmax(k)i of a pixel located most downstream among the positions in the rolling direction of the pixels constituting the downstream side boundary line 2B of the reflecting light area 2, within each of the divided zones (i) (i = 1 to j) obtained by j-dividing the reflecting light area 2 in the strip width direction in the (k)th image. This data is stored in the database 83.

In addition, the image processing unit 82 extracts first positional data of a most upstream position in the rolling direction within the divided zone (i) from among F pieces of data from Pumin(k - F + 1)i to Pumin(k)i for respective F images from an image number (k - F + 1) to an image number (k), the F images being stored in the database 83, and sets the first positional data as Pure_min(k)i as data of the (k)th image, extracts second positional data of a most downstream position in the rolling direction within the divided zone (i) from among F pieces of data from Pumax(k - F + 1)i to Pumax(k)i and sets the second positional data as Pure_max(k)i as data of the (k)th image, extracts third positional data of a most upstream position in the rolling direction within the divided zone (i) from among F pieces of data from Pdmin(k - F + 1)i to Pdmin(k)i and sets the third positional data as Pdre_min(k)i as data of the (k)th image, and extracts fourth positional data of a most downstream position in the rolling direction within the divided zone (i) from among F pieces of data from Pdmax(k - F + 1)i to Pdmax(k)i and sets the fourth positional data as Pdre_max(k)i as data of the (k)th image. These pieces of data are stored in the database 83.

Further, the image processing unit 82 calculates a difference [Pure_max(k)i - Pure_min(k)i] between the pieces of positional data in the rolling direction of the upstream side boundary line 2A in the (k)th image for each divided zone (i) and determines resulting j values of [Pure_max(k)i - Pure_min(k)i] as maximum fluctuating amplitude "Au(k)i" of the upstream side boundary line 2A in the (k)th image, and calculates a difference [Pdre_max(k)i - Pdre_min(k)i] between the pieces of positional data in the rolling direction of the downstream side boundary line 2B in the (k)th image for each divided zone (i) and determines resulting j values of [Pdre_max(k)i - Pdre_min(k)i] as a maximum fluctuating amplitude "Ad(k)i" of the downstream side boundary line 2B in the (k)th image. Thereafter, an average value of the maximum fluctuating amplitudes "Au(k)i" and "Ad(k)i" in the rolling direction of the upstream side boundary line 2A and the downstream side boundary line 2B is calculated for each divided zone (i), and is represented as A(k)i. A(k)i is set as an index B (average maximum fluctuating amplitude in the divided zone (i) of the upstream side boundary line 2A and the downstream side boundary line 2B of the reflecting light area 2) of the (k)th image. The value of A(k)i is made to correspond to a center position in the strip width direction of the divided zone (i). Providing a value indicative of a position in the strip width direction is referred to as a variable (x), A(k)i made to correspond to a position x obtained by standardizing a position in the strip width direction within a strip width range into a range of -1 ≤ x ≤ 1 is set as E(xi) of the (k)th image.

A method of obtaining the "average value of the fluctuation frequencies of the upstream side boundary line 2A and the downstream side boundary line 2B of the reflecting light area 2" is as follows.

The image processing unit 82 performs, for each of the obtained images, the following five pieces of analysis processing by using the obtained images.

The image processing unit 82 assigns numbers 1, 2, 3, ..., k, ... to the obtain-ned images in order, and determines a pixel position Pu(k)p (p = 1 to Ru, where Ru is the number of pixels constituting the upstream side boundary line 2A of the reflecting light area 2) in the rolling direction of an upstream side pixel point constituting the upstream side boundary line 2A of the reflecting light area 2 and a pixel position Pd(k)q (q = 1 to Rd, where Rd is the number of pixels constituting the downstream side boundary line 2B of the reflecting light area 2) in the rolling direction of a downstream side pixel point constituting the downstream side boundary line 2B of the reflecting light area 2 in the (k)th image. This data is preferably stored in the database 83.

Here, as described above, the boundary lines of the reflecting light area 2 vary during rolling. Thus, the image processing unit 82 determines, from a pixel position Pu(k - 1)p of an image number (k - 1) and the pixel position Pu(k)p of the image number (k) stored in the database 83, a movement distance Mu(k)p (= Pu(k)p - Pu(k - 1)p) in the rolling direction of the pixel point on the upstream side boundary line 2A of the reflecting light area 2, and determines, from a pixel position Pd(k - 1)q of the image number (k - 1) and the pixel position Pd(k)q of the image number (k), a movement distance Md(k)q (= Pd(k)q - Pd(k - 1)q) in the rolling direction of the pixel point on the downstream side boundary line 2B of the reflecting light area 2.

Further, the image processing unit 82 reconsiders the movement distance Mu(k)p in the rolling direction of the pixel point on the upstream side boundary line 2A of the reflecting light area 2 within the range of the divided zone (i) (i = 1 to j) obtained by j-dividing the reflecting light area 2 in the strip width direction, determines an average value of movement distances Mu(k)p in the rolling direction of pixel points on the upstream side boundary line 2A that are present within the range of the divided zone (i), and sets the average value as an average movement distance Mu(k)i of the pixel points constituting the upstream side boundary line 2A of the reflecting light area 2 in the divided zone (i). Similarly, the image processing unit 82 determines an average value of movement distances Md(k)q in the rolling direction of pixel points on the downstream side boundary line 2B that are present within the range of the divided zone (i), and sets the average value as an average movement distance Md(k)i of the pixel points constituting the downstream side boundary line 2B of the reflecting light area 2 in the divided zone (i).

Next, the image processing unit 82 divides the average movement distance Mu(k)i of the pixel points constituting the upstream side boundary line 2A of the reflecting light area 2 in the divided zone (i) obtained by j-dividing the reflecting light area 2 in the strip width direction and the average movement distance Md(k)i of the pixel points constituting the downstream side boundary line 2B of the reflecting light area 2 in the divided zone (i) by a time Ts taken from the acquisition of the (k - 1)th image to the acquisition of the (k)th image. The image processing unit 82 thereby calculates an average movement speed Vu(k)i (= Mu(k)i/Ts) of the pixel points constituting the upstream side boundary line 2A and an average movement speed Vd(k)i (= Md(k)i/Ts) of the pixel points constituting the downstream side boundary line 2B in each divided zone (i) of the reflecting light area 2.

Next, the image processing unit 82 determines, from the average movement speed Vu(k)i of the pixel points constituting the upstream side boundary line 2A and the average movement speed Vd(k)i of the pixel points constituting the downstream side boundary line 2B, how many times respective positive or negative signs (+/-) of the average movement speed Vu(k)i and the average movement speed Vd(k)i are inverted during a time Tf taken from the acquisition of the (k - F + 1)th image to the acquisition of the (k)th image, and obtains the number of sign inversions Nu(k)i of the average movement speed Vu(k)i of the pixel points constituting the upstream side boundary line 2A of the reflecting light area 2 in the divided zone (i) and the number of sign inversions Nd(k)i of the average movement speed Vd(k)i of the pixel points constituting the downstream side boundary line 2B of the reflecting light area 2.

Thereafter, the image processing unit 82 obtains, from the numbers of sign inversions Nu(k)i and Nd(k)i, an average fluctuation frequency Qu(k)i (= [Nu(k)i/Tf]/2) of the pixel points constituting the upstream side boundary line 2A of the reflecting light area 2 and an average fluctuation frequency Qd(k)i (= [Nd(k)i/Tf]/2) of the pixel points constituting the downstream side boundary line 2B, and further obtains Q(k)i (= [Qu(k)i + Qd(k)i]/2) as an average fluctuation frequency of the pixel points constituting the upstream side boundary line 2A and the downstream side boundary line 2B forming the reflecting light area 2 in each divided zone (i).

Further, the image processing unit 82 sets the value of the obtained information Q(k)i as an index C corresponding to a rolled metal strip buckle in the (k)th image (average value of the fluctuation frequencies of the upstream side boundary line 2A and the downstream side boundary line 2B of the reflecting light area 2), providing a value indicative of a position in the strip width direction is referred to as the variable (x), standardizes the position in the strip width direction within a strip width range into a range of -1 ≤ x ≤ 1, makes the center position of each divided zone (i) in the strip width direction correspond as xi, and sets Q(k)i as the Chebyshev polynomial E(xi) = Q(k)i of Equation (1) at the time point of the (k)th image.

For the index A, or the index B, or the index C corresponding to the rolled metal strip buckle in the (k)th image as described above, the image processing unit 82 applies the values of the center position xi in the strip width direction of each divided zone (i) and E(xi) (E(xi) = D(k)i, A(k)i, Q(k)i) in the (k)th image to the Chebyshev polynomial of Equation (1) for each divided zone (i), performs curve fitting by using a least-square method, obtains the coefficients (C₀, C₁, C₂, and C₄) of orders of x of the Chebyshev polynomial from an equation of an approximate curve thereof, and transmits the first order coefficient (C₁) as a signal representing a detected result of the rolled metal strip buckle distribution of the first order component in the strip width direction.

Incidentally, preferably, the image processing unit 82 can further transmit, in addition to the first order coefficient (C₁), any one or more of the second order coefficient (C₂) and the fourth order coefficient (C₄) as a signal representing a detected result of the rolled metal strip buckle distribution(s) of one or more of the second order component and the fourth order component in the strip width direction.

The database 83 functions also as a recording medium on which various kinds of parameters used at a time of operating the rolling facility 100 and the like are recorded.

Here, with regard to a method of dividing the reflecting light area 2, each of the divided zones (i) (i = 1 to j) j-divided in the strip width direction may be obtained by equally dividing the reflecting light area 2 into the j zones, or may be obtained by unequally dividing the reflecting light area 2 into the j zones with respective optional widths.

Returning to FIG. 1, the control device 84 is a device that controls the operation of each apparatus within the rolling facility 100. In the present embodiment, the control device 84 is a device that performs various kinds of control in response to the detection of the strip shape of the metal strip 1 in the image processing computer 80.

The image processing computer 80, the database 83, and the control device 84 can be constituted by a computer having the monitor 85 such as a liquid crystal display to be described later, an input device, a storage device, a CPU, a memory, and the like. These may be constituted by one computer, and may be constituted by respective different computers. There is thus no particular limitation.

The control of the operation of the various apparatuses by the image processing computer 80 and the control device 84 is performed on the basis of various kinds of programs recorded in the storage device. Incidentally, the processing of the operation control performed by the image processing computer 80 and the control device 84 may be integrated in one program, or respective pieces of the processing may be separated in a plurality of programs, or there may be a combination thereof. In addition, a part or all of the programs may be implemented by dedicated hardware, or may be modularized.

The monitor 85 includes a display apparatus such as a display and an audio apparatus such as an alarm. The monitor 85 is a device for notifying an operator of work for handling a problem, for example, when the image processing computer 80 detects that the problem has occurred in the strip shape. A display is therefore often used as such a monitor 85.

Here, the image processing computer 80 described above includes a display signal section, and transmits a signal related to contents to be displayed on the monitor 85 to the control device 84 and the monitor 85.

During operation, the operator can check the state of the strip shape by visually checking a display screen of the monitor 85, the rolling mill stands themselves, and states between the rolling mill stands.

It is to be noted that there is no limitation to a configuration in which the operator is notified of the occurrence of the problem in the strip shape, and an operation for remedying the problem in the strip shape is automatically performed by the control device 84, but a configuration can be adopted in which the problem in the strip shape is only displayed on the monitor 85, or a configuration can be adopted in which the display on the monitor 85 is omitted, and only the operation for remedying the problem in the strip shape is automatically performed by the control device 84.

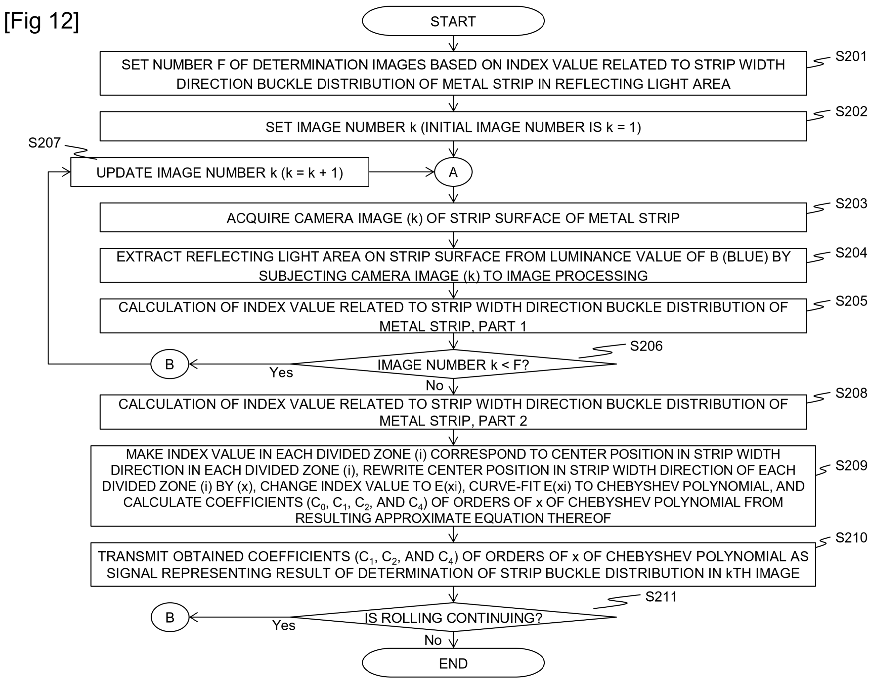

The strip shape determining device and a flow of the determining method for the rolled metal strip 1 in the present invention will next be described with reference to FIG. 12. FIG. 12 is a flowchart illustrating the strip shape determining method according to the present invention.

As illustrated in FIG. 12, before a start of rolling or during the rolling, the image processing computer 80 sets the number F of determination images (for example, F = 20 or F = 1000) based on the index value related to the strip width direction buckle distribution of the metal strip 1 in the reflecting light area 2 (step S201), and sets the image number k (step S202). Here, suppose that an initial value of the image number is k = 1.

Thereafter, the image processing computer 80 obtains a surface image (image number k) of the metal strip 1 in the vicinity of a curved portion of the metal strip 1 photographed by the cameras 61, 62, 63, and 64 and lifted by the loopers 71, 72, 73, and 74 (step S203). Here, obtained images are assigned numbers such as 1, 2, 3, ..., k, ... in order of obtainment of the images.

Next, the luminance data acquisition unit 81 of the image processing computer 80 subjects the image (image number k) photographed by the cameras 61, 62, 63, and 64 to image processing, and thereby extracts the reflecting light area 2 on the surface of the metal strip 1 in the vicinity of the curved portion of the metal strip 1 (step S204).

For example, the luminance data acquisition unit 81 of the image processing computer 80 acquires only all of the luminance values of B (blue) among the luminance values of R (red), the luminance values of G (green), and the luminance values of B (blue) of pixels appearing in a selected rolled surface image range in the images photographed by the cameras 61, 62, 63, and 64, obtains pixel coordinates constituting the upstream side boundary line 2A and the downstream side boundary line 2B observed in the strip width direction on the upstream side and the downstream side of the reflecting light area 2 appearing on the surface of the metal strip 1, and thereby identifies the reflecting light area 2.

Next, the image processing unit 82 of the image processing computer 80 performs calculation processing in a first stage of the index value related to the strip width direction buckle distribution of the metal strip 1, preferably the index A as the "maximum value of the interval between the upstream side boundary line 2A and the downstream side boundary line 2B of the reflecting light area 2" or the index B as the "average value of the maximum fluctuating amplitude of the upstream side boundary line 2A and the maximum fluctuating amplitude of the downstream side boundary line 2B of the reflecting light area 2" or the index C as the "average value of the fluctuation frequencies of the upstream side boundary line 2A and the downstream side boundary line 2B of the reflecting light area 2" (step S205).

Next, the image processing unit 82 of the image processing computer 80 determines whether or not Image Number k < F (step S206). When it is determined that Image Number k < F, the processing is advanced to step S207 to update the image number k (k = k + 1) (step S207), and the processing is advanced to step S203 to wait for the processing of the predetermined number of images to be performed. When it is determined in step S206 that Image Number k **≥** F, on the other hand, the processing is advanced to step S208.

Next, the image processing unit 82 of the image processing computer 80 performs calculation processing in a second stage of the index value related to the strip width direction buckle distribution of the metal strip 1 (step S208). Details thereof will be omitted.

Next, the image processing unit 82 of the image processing computer 80 makes the index value in each divided zone (i) at a time of dividing the reflecting light area 2 in the strip width direction correspond to the center position (xi) in the strip width direction of the divided zone (i), curve-fits E(xi) expressed as E(xi) by using (x) to the Chebyshev polynomial of Equation (1), and calculates the coefficients (C₀, C₁, C₂, and C₄) of orders of x of the Chebyshev polynomial from a resulting approximate equation thereof (step S209).

Next, the image processing unit 82 of the image processing computer 80 transmits the Chebyshev coefficients (C₁, C₂, and C₄) obtained in step S209 as a signal representing a detection result of the strip buckle distribution in the (k)th image to the control device 84 and the monitor 85, for example (step S210).

Thereafter, the image processing computer 80 determines whether or not the rolling is continuing (step S211). When determining that the rolling is continuing, the image processing computer 80 returns the processing to step S207 to update the image number (k) as (k = k + 1), and continue the strip shape detection processing. When it is determined that the rolling is completed, on the other hand, the processing is ended.

Incidentally, suppose that a third order component is not used in the Chebyshev polynomial in the present embodiment. This is because the rolling control mechanisms of the rolling mills are not configured to handle strip buckling correction for the third order component. The determination of conditions of rolled strip shapes of the first order component, the second order component, and the fourth order component that are separated and the strip buckling correction can be performed more easily by omitting computation processing and handling means for the third order component.

The image processing computer 80 can output control command signals to correct leveling, a roll bending force, a pair cross angle, and the like to the control device 84 on the basis of a polynomial approximation result in the strip width direction obtained by using the Chebyshev polynomial of Equation (1). Further, instead or in addition, correction information for the leveling, the roll bending force, the pair cross angle, and the like can be communicated to the operator by outputting, to the monitor 85, a display command signal to make guidance display necessary for the correction of the leveling, the roll bending force, the pair cross angle, and the like.

Preferably, the image processing computer 80 can transmit a signal to the monitor 85 so as to display a graph of the respective component terms of the zeroth order component [C₀] of x, the first order component [C₁ × x] of x, the second order component [C₂ × (2x² - 1)] of x, and the fourth order component [C₄ × (8x⁴ - 8x² + 1)] of x in the function of a vector (C₀, C₁, C₂, C₄) of each order term in the Chebyshev polynomial E(x) of Equation (1) described above.

The operator can check the display screen of the monitor 85, and perform, for example, an operation of correcting the leveling, the roll bending force, the pair cross angle (in a case of a pair cross rolling mill), or the like.

Effects of the present embodiment will next be described.

The strip shape determining device for determining a defect of the strip shape of the metal strip 1 rolled by a rolling mill in the present embodiment described above includes: the loopers 71, 72, 73, and 74 that are installed with rotating shafts thereof extending in the width direction of the metal strip 1 and lift the metal strip 1 upward; the cameras 61, 62, 63, and 64 (photographing step) that photograph images including a lifted area of the metal strip 1 lifted toward the upper side by the loopers 71, 72, 73, and 74; the luminance data acquisition unit 81 (luminance data acquisition step) that acquires a luminance value of B (blue) from luminance data of pixels of the images photographed by the cameras 61, 62, 63, and 64; and the image processing unit 82 (image processing step) that obtains the reflecting light area in which the luminance value of B (blue) is equal to or larger than a certain value in the images by using only the luminance data of the luminance value of B (blue) acquired by the luminance data acquisition unit 81 and determines a defect of the strip shape on the basis of coordinates of the boundary position of the reflecting light area.

It is thereby possible to extract a change in the coordinates of the boundary line of the reflecting light area with higher accuracy as compared with the conventional method, and therefore enhance the determination accuracy of the strip shape more than conventional.

In addition, the image processing unit 82 obtains coordinates of a pixel point of the boundary position in the strip longitudinal direction of the reflecting light area, providing a value indicative of a position in the strip width direction is referred to as a variable (x), standardizes the position in the strip width direction within a strip width range of the reflecting light area in the images into a range of -1 ≤ x ≤ 1, calculates an index value related to the strip width direction buckle distribution of the metal strip 1 from a change in a strip longitudinal direction coordinate of the coordinates of the pixel point of the boundary position of the reflecting light area, obtains respective index values at a plurality of positions of (x) that are at least four points or more, applies the index values to the Chebyshev polynomial $E \left(x\right) = {C}_{0} + {C}_{1} \times x + {C}_{2} \times \left(2{x}^{2}-1\right) + {C}_{4} \times \left(8{x}^{4}-8{x}^{2}+1\right) \left(where-1\leq x\leq 1\right) ,$ performs curve fitting, obtains the coefficients (C₀, C₁, C₂, and C₄) of the Chebyshev polynomial, and determines a defect of the strip shape on the basis of the coefficient (C₁) of the term of the first order component of the Chebyshev polynomial. It thereby becomes possible to evaluate a change in the strip buckle distribution with high accuracy.

Further, the image processing unit 82 determines the defect of the strip shape by further using the coefficient (C₂) of the term of the second order component or the coefficient (C₄) of the term of the fourth order component. It thereby becomes possible to deal with more changes in the strip shape.

### <Others>

It is to be noted that the present invention is not limited to the foregoing embodiments, but is susceptible of various modifications and applications. The foregoing embodiments have been described in detail in order to describe the present invention in an easily understandable manner, and are not necessarily limited to including all of the described configurations.

### [Explanation of Symbols]

- 1: metal strip
- 2: reflecting light area
- 2a: upstream side boundary line of reflecting light area
- 2b: downstream side boundary line of reflecting light area
- 10: f1 stand
- 11, 21, 31, 41, 51: roll gap cylinder
- 12, 22, 32, 42, 52: load detector
- 20: f2 stand
- 30: f3 stand
- 40: f4 stand
- 50: f5 stand
- 61, 62, 63, 64: camera
- 71, 72, 73, 74: looper
- 80: image processing computer
- 81: luminance data acquisition unit
- 82: image processing unit
- 83: database
- 84: control device
- 85: monitor
- 90: communication line
- 100: rolling facility

## Claims

1. A strip shape determining device for determining a defect of a strip shape of a metal strip (1) rolled by a rolling mill, the strip shape determining device comprising:
a roll (71, 72, 73, 74) that is installed with a rotating shaft thereof extending in a width direction of the metal strip (1) and lifts the metal strip (1) upward; and
a camera (61, 62, 63, 64) configured to photograph an image including a lifted area of the metal strip (1) lifted toward an upper side by the roll (71, 72, 73, 74); **characterized in that** the strip shape determining device further comprising:
a luminance data acquisition unit (81) configured to acquire a luminance value of B (blue) from luminance data of R (red), G (green), and B (blue) of pixels of the image photographed by the camera (61, 62, 63, 64); and
an image processing unit (82) configured to obtains a reflecting light area in which the luminance value of B (blue) is equal to or larger than a certain value in the image by using only the luminance data of the luminance value of B (blue) acquired by the luminance data acquisition unit (81), and determines the defect of the strip shape on a basis of coordinates of a boundary position of the reflecting light area.

2. The strip shape determining device according to claim 1, wherein
the image processing unit (82) configured to
obtain coordinates of a pixel point of the boundary position in a strip longitudinal direction of the reflecting light area,
provide a value indicative of a position in a strip width direction is referred to as a variable (x), standardizes the position in the strip width direction within a strip width range of the reflecting light area in the image into a range of -1 ≤ x ≤ 1, calculates an index value related to a strip width direction buckle distribution of the metal strip (1) from a change in a strip longitudinal direction coordinate of the coordinates of the pixel point of the boundary position of the reflecting light area, obtains respective index values at a plurality of positions of (x) that are at least four points or more, applies the index values to a Chebyshev polynomial $E \left(x\right) = {C}_{0} + {C}_{1} \times x + {C}_{2} \times \left(2{x}^{2}-1\right) + {C}_{4} \times \left(8{x}^{4}-8{x}^{2}+1\right) \left(where-1\leq x\leq 1\right) ,$ and performs curve fitting, and
obtain coefficients (C₀, C₁, C₂, and C₄) of orders of x of the Chebyshev polynomial, and determines the defect of the strip shape on a basis of the coefficient (C₁) of a term of a first order component of the Chebyshev polynomial.

3. The strip shape determining device according to claim 2, wherein
the image processing unit (82) configured to determine the defect of the strip shape by further using the coefficient (C₂) of a term of a second order component or the coefficient (C₄) of a term of a fourth order component.

4. A strip shape determining method for determining a defect of a strip shape of a metal strip (1) rolled by a rolling mill, the strip shape determining method comprising:
a photographing step of photographing, by a camera (61, 62, 63, 64), an image including a lifted area of the metal strip (1) lifted toward an upper side by a roll (71, 72, 73, 74) that is installed with a rotating shaft thereof extending in a width direction of the metal strip (1) and lifts the metal strip (1) upward; **characterized in that** the strip shape determining method further comprising:
a luminance data acquisition step of acquiring, by an image processing computer, a luminance value of B (blue) from luminance data of R (red), G (green), and B (blue) of pixels of the image photographed in the photographing step; and
an image processing step of, by the image processing computer, obtaining a reflecting light area in which the luminance value of B (blue) is equal to or larger than a certain value in the image by using only the luminance data of the luminance value of B (blue) acquired in the luminance data acquisition step, and determining the defect of the strip shape on a basis of coordinates of a boundary position of the reflecting light area.
